# EUROPEAN PATENT APPLICATION

(11) **EP 2 674 403 A1**
(43) Date of publication of application: **18.12.2013**
(21) Application number: 11858417.6
(22) Date of filing: 29.06.2011
(51) Int. Cl.: C03C 17/25, C09K 17/00

(54) **GLASS ARTICLE HAVING ULTRAVIOLET RAY SHIELDING PERFORMANCE, AND MICROPARTICLES-DISPERSED COMPOSITION FOR FORMING ULTRAVIOLET RAY SHIELDING FILM**

(30) Priority: 07.02.2011 JP 2011024391
(71) Applicant: Nippon Sheet Glass Company Limited, Tokyo 108-6321 (JP)
(72) Inventor: SASAKI, Teruyuki, Tokyo 108-6321 (JP); YABUTA, Takeshi, Tokyo 108-6321 (JP); KAMITANI, Kazutaka, Tokyo 108-6321 (JP); MAEDA, Tomoyuki, Himeji-shi Hyogo 671-0234 (JP)
(74) Representative: Hart-Davis, Jason
(86) International application number: PCT/JP2011/003710
(87) International publication number: WO 2012/107968

(57) **Abstract**

An ultraviolet shielding film according to the present invention includes a silicon oxide and fine particles of an organic compound A that is solid at ordinary temperature and that has a molecular weight of 5,000 or less, the fine particles having an average particle diameter of 150 nm. A glass article of the present invention has an ultraviolet transmittance (TUV 380) of, for example, 2% or less, and preferably further has a light transmittance (T 550) more than 70% at a wavelength of 550 nm. The ultraviolet shielding film may further include an organic compound B such as a polyether compound and a polyol compound. The ultraviolet shielding film is excellent in the sustainability of the ultraviolet shielding ability.

## Description

### TECHNICAL FIELD

The present invention relates to a glass article including a glass sheet and an ultraviolet shielding film formed on the glass sheet. The present invention also relates to a fine particle-dispersed composition for forming an ultraviolet shielding film.

### BACKGROUND ART

Glass sheets are required to have the property of shielding against ultraviolet light while allowing transmission of visible light. In particular, for use in window glasses, glass sheets additionally provided with the function of shielding against ultraviolet light (ultraviolet shielding ability) are increasingly demanded from the standpoint of, for example, prevention of sunburn. Accordingly, glass sheets are produced and sold which have a composition having a high proportion of an inorganic component for absorbing ultraviolet light, such as iron oxide (III; Fe₂O₃).

Merely adjusting the composition of a glass sheet can achieve only a limited ultraviolet shielding effect. Therefore, it has been proposed to form a film having ultraviolet shielding ability (ultraviolet shielding film) on a glass sheet. For example, International Publication No. 2006/137454 (Patent Literature 1) discloses a technique of forming, on a glass sheet, an ultraviolet shielding film containing: silicon oxide (silica) that is a main component; an organic compound that is a hydrophilic organic polymer; and an ultraviolet absorber. This technique corresponds to additionally providing ultraviolet shielding ability to a highly abrasion-resistant organic-inorganic composite film in International Publication No. 2005/095101 (Patent Literature 2) which also was made by some of the present inventors. As examples of the ultraviolet absorber, Patent Literature 1 discloses organic compounds such as benzotriazole-based compounds, polymethine-based compounds, and imidazoline-based compounds.

Benzotriazole-based ultraviolet absorbers can absorb ultraviolet light over a broad wavelength range, and are also excellent in absorbing sufficient light. Therefore, benzotriazole-based ultraviolet absorbers are widely used, for example, as additives for preventing plastics from being degraded by ultraviolet light. The ultraviolet absorber used in Examples of Patent Literature 1 is also a benzotriazole-based compound. In the technique disclosed in Patent Literature 1, a film is formed by a sol-gel method. A lower alcohol that is a polar solvent is used in a solution for forming a film by a sol-gel method. Accordingly, in Examples of Patent Literature 1, a benzotriazole-based ultraviolet absorber, "TINUVIN 1130" manufactured by Ciba Specialty Chemicals, which is liquid at ordinary temperature and is soluble in lower alcohols, is selected and added to a film-forming solution.

JP 2009-184882 A (Patent Literature 3) discloses a glass sheet including an ultraviolet shielding film formed from a solution containing a benzotriazole-based ultraviolet absorber and a non-polar solvent. This film is formed not by a sol-gel method, but by using a solution containing polysilazane which can be cured at a low temperature. In this solution, a non-polar solvent (e.g., xylene) is used as a solvent. Therefore, the ultraviolet absorber can be selected from a wider range of materials than in the case of using a polar solvent. An example (Preparation Example 3) of Patent Literature 3 uses a benzotriazole-based ultraviolet absorber, "TINUVIN 109" manufactured by Ciba Specialty Chemicals, which has an excellent ability to absorb long-wavelength light in the ultraviolet region. The "TINUVIN 109" is also liquid at ordinary temperature.

### CITATION LIST

### Patent Literature

Patent Literature 1: International Publication No. 2006/137454
Patent Literature 2: International Publication No. 2005/095101
Patent Literature 3: JP 2009-184882 A

### SUMMARY OF INVENTION

### Technical Problem

The aforementioned conventional ultraviolet shielding films have a problem in that reduction in the ultraviolet shielding effect cannot be sufficiently prevented when the ultraviolet shielding films are used outdoors for a long period of time. Therefore, an object of the present invention is to provide a glass article including an ultraviolet shielding film excellent in sustainability of ultraviolet shielding performance. In addition, another object of the present invention is to provide a fine particle-dispersed liquid suitable for forming an ultraviolet shielding film excellent in sustainability of ultraviolet shielding performance.

### Solution to Problem

One aspect of the present invention provides a glass article having ultraviolet shielding ability, the glass article including a glass sheet and an ultraviolet shielding film formed on the glass sheet. The ultraviolet shielding film includes silicon oxide and fine particles of an organic compound A as an ultraviolet shielding component. The organic compound A is solid at ordinary temperature, and has a molecular weight of 5,000 or less. The fine particles have an average particle diameter of 150 nm or less.

Another aspect of the present invention provides a fine particle-dispersed composition for forming an ultraviolet shielding film, the fine particle-dispersed composition including a dispersion medium that is a liquid and an ultraviolet shielding component dispersed in the dispersion medium. The ultraviolet shielding component includes fine particles of an organic compound A that is solid at ordinary temperature and that has a molecular weight of 5,000 or less. The fine particles have an average particle diameter of 150 nm or less.

### Advantageous Effects of Invention

The present invention can provide a glass article including an ultraviolet shielding film whose ultraviolet shielding performance is less likely to deteriorate even when the glass article is used outdoors for a long period of time. Conventionally, a compound that is liquid at ordinary temperature is selected as an ultraviolet absorber added to an ultraviolet shielding film on a glass sheet, since such a compound is appropriate for a film formation method using a solution. By contrast, to the ultraviolet shielding film of the present invention, the organic compound A that is solid at ordinary temperature and that serves as the ultraviolet absorber is added in the form of fine particles having such particle diameters that transmittance for visible light is not significantly reduced. Therefore, it is possible to improve the sustainability of the ultraviolet shielding performance while maintaining transmittance for visible light.

Furthermore, in the present invention, an ultraviolet absorber having a molecular weight of 5,000 or less is used. A high-molecular-weight ultraviolet absorber obtained by polymerization of a polymerizable ultraviolet absorber is also known as an ultraviolet absorber that is solid at ordinary temperature. However, since such a high-molecular-weight ultraviolet absorber is produced by polymerizing an ultraviolet absorber into which a polymerizable functional group such as (meth)acryl group has been introduced, the high-molecular-weight ultraviolet absorber is inferior to a low-molecular-weight ultraviolet absorber in the amount of a component having an effect on ultraviolet absorption per unit weight. An ultraviolet absorber that has a low molecular weight but that is solid at ordinary temperature is added to the ultraviolet shielding film of the present invention. Therefore, good ultraviolet shielding effect can be maintained for a long period of time.

In addition, the fine particle-dispersed composition for forming an ultraviolet shielding film according to the present invention allows an ultraviolet shielding film excellent in sustainability of ultraviolet shielding performance to be formed on a glass sheet by a liquid-phase film formation method suitable for mass production.

### BRIEF DESCRIPTION OF DRAWINGS

FIG. 1 is a cross-sectional view showing an embodiment of a glass article of the present invention.
FIG. 2 is a X-ray diffraction chart for an ultraviolet shielding film-coated glass sheet fabricated in Example All.
FIG. 3 is a X-ray diffraction chart for an ultraviolet shielding film-coated glass sheet fabricated in Example B6.
FIG. 4 is a diagram showing spectral absorbance curves for dispersion liquids prepared in Examples D1 and D2, and for solutions fabricated in Comparative Examples D1 and D2.
FIG. 5 is a plan view showing an embodiment in which a glass article of the present invention is used as a door glass.
FIG. 6 is a plan view showing another embodiment in which a glass article of the present invention is used as a door glass.
FIG. 7 is a partial cross-sectional view showing an embodiment in which a glass article of the present invention is used as a door glass.

### DESCRIPTION OF EMBODIMENTS

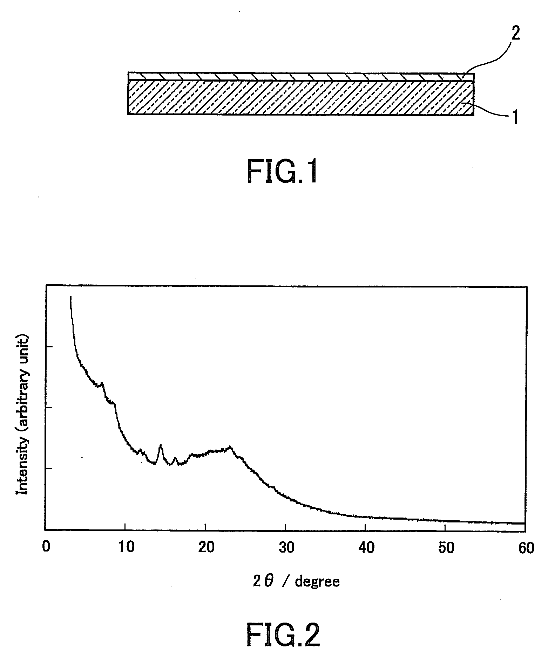

A glass article of the present invention exemplified in FIG. 1 includes a glass sheet 1 and an ultraviolet shielding film 2 formed directly on a surface of the glass sheet.

The ultraviolet shielding film 2 contains an inorganic material (silicon oxide), and also contains an organic material, that is, fine particles of an organic compound A. Preferably, the ultraviolet shielding film 2 further contains an organic compound B (examples of the organic compound B are compounds categorized as polyethers and/or polyols, and a detailed description will be given later). The ultraviolet shielding film 2 may further contain, as an organic material, a silane coupling agent or a structural unit derived from a silane coupling agent. The "structural unit derived from a silane coupling agent" specifically means a structure formed by reaction of the silane coupling agent with another organic or inorganic material, and the structure can be called a silane coupling agent derivative.

The organic compound A is not particularly limited, and may be any organic compound that is solid at ordinary temperature, that has a molecular weight of 5,000 or less, and that can be pulverized into particles having an average particle diameter of 150 nm or less. Conventionally-known ultraviolet absorbers, such as benzotriazole-based, benzophenone-based, triazine-based, polymethine-based, or imidazoline-based ultraviolet absorbers, can be used. In addition, any organic compound conventionally applied to other uses and having ultraviolet shielding ability, such as a benzenethiol-copper complex derivative described later, may also be used.

The molecular weight of the organic compound A is preferably 3000 or less, more preferably 2000 or less, and even more preferably 1500 or less. In some cases, the molecular weight may be 1300 or less, even 1200 or less, particularly 900 or less, and more particularly 800 or less. However, when the molecular weight of the organic compound A is too small, it is difficult to keep the organic compound A solid at ordinary temperature. Therefore, the molecular weight of the organic compound A is preferably 200 or more, more preferably 300 or more, and even more preferably 500 or more.

The organic compound A preferably contains no polymerizable carbon-carbon double bond in its molecule. Examples of polymerizable carbon-carbon double bonds include double bonds contained in polymerizable functional groups such as vinyl group, vinylene group, and vinylidene group. Preferably, the organic compound A does not contain any of such functional groups in its molecule.

A preferred example of the organic compound A is an organic compound α whose molecule has two or more, for example, 2 to 8, or preferably 2 to 4 functional groups represented by the following formula (1).

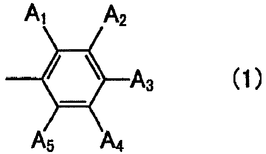

Here, A₁ to A₅ are each independently a hydrogen atom, a hydroxyl group, a linear or branched alkyl group having 1 to 20 carbon atoms, preferably 5 to 15 carbon atoms, more preferably 7 to 13 carbon atoms, or a functional group represented by the following formula (2). It should be noted that at least one of A₁ to A₅ is a functional group represented by the following formula (2).

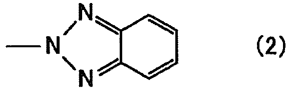

The organic compound α is a benzotriazole-based ultraviolet absorber whose molecule contains at least two benzotriazole structures (see the formula (2)). At least two benzotriazole structures which are present per molecule contribute to the ultraviolet shielding effect of the organic compound α, and also contribute to maintaining a molecular weight large enough to allow the organic compound α to be solid at ordinary temperature. As is well-known, the melting point of a compound is not determined depending only on the molecular weight. However, the molecular weight is a factor having significant influence on the melting point. The organic compound α is a compound suitable for forming an ultraviolet shielding film excellent in the sustainability of the ultraviolet shielding effect and having a low value of haze ratio which is a factor to which an importance is given particularly in the case of a glass article.

In the functional group represented by the formula (1), for example, one of A₁ to A₅ may be a hydroxyl group, another may be the alkyl group specified above, another may be the functional group represented by the formula (2), and the other two may each be a hydrogen atom. Specifically, the organic compound α preferably has two or more functional groups represented by the following formula (3) per molecule. In the formula (3), R₁ is a linear or branched alkyl group having 1 to 20 carbon atoms, preferably 5 to 15 carbon atoms, more preferably 7 to 13 carbon atoms.

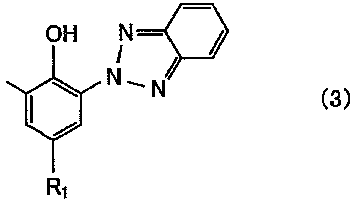

There is a tendency that the more the number of carbon atoms of the alkyl group contained in the organic compound α is, the higher the hydrophobicity of the entire molecule is, and the more easily the organic compound α can be included in the form of fine particles in a film fabricated from a dispersion liquid whose dispersion medium is water. However, there is a tendency that when the number of carbon atoms is too large, the melting point of the organic compound α is lowered by influence of steric hindrance or the like.

In a preferred embodiment of the present invention, the organic compound α has a structural unit in which two functional groups represented by the formula (3) are connected via an alkylene group. The number of carbon atoms constituting the alkylene group is preferably 3 or less, and particularly preferably 2 or less.

The organic compound α may be a compound represented by the following formula (4).

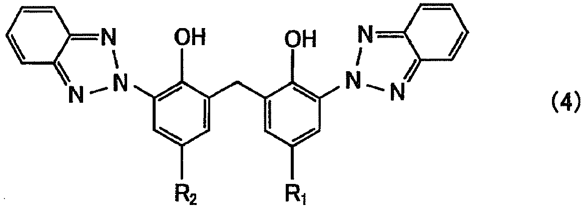

Here, R₁ and R₂ are each independently a linear or branched alkyl group having 1 to 20 carbon atoms, preferably 5 to 15 carbon atoms, more preferably 7 to 13 carbon atoms.

Another preferred example of the organic compound A is an organic compound β having a structural unit represented by the following formula (5) in its molecule. The organic compound β is a benzenethiol-copper complex derivative.

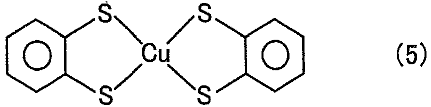

Due to the resonance effect derived from the structure represented by the formula (5), the benzenethiol-copper complex contributes to absorption of light having a wavelength of around 400 nm. The range of wavelengths of light absorbed due to the resonance effect is shifted when Cu is substituted with another metal atom (for example, the resonance effect is obtained in the range of shorter wavelengths when Cu is substituted with Zn or Al). In the case where importance should be given to the ability to absorb light having a wavelength of around 400 nm, Cu is most suitable as the metal atom.

The growing demand for the ultraviolet shielding properties of glass sheets has led to a demand not only for increasing the degree of shielding but also for shielding against longer-wavelength light in the ultraviolet region. In some recent cases, it is required to shield against short-wavelength light (having a wavelength of around 400 nm) in the visible region rather than light in the ultraviolet region. The use of the organic compound β having the structure represented by the formula (5) allows for the effect of shielding against not only light in the ultraviolet region but also light having a wavelength of around 400 nm.

The organic compound ß preferably has a structure represented by the following formula (6), and more preferably has a structure represented by the following formula (7). For example, the organic compound β may be a compound represented by the formula (11).

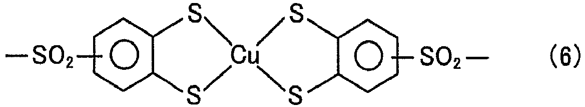

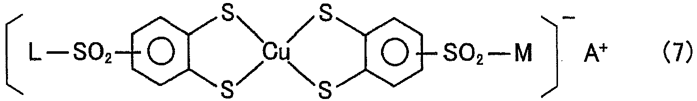

Here, L and M are each independently a group represented by any one of the following formulae (8), (9), and (10). In addition, A is a quaternary ammonium salt. Examples of the quaternary ammonium salt include tetramethylammonium salts, tetraethylammonium salts, tetraisopropylammonium salts, tetrabutylammonium salts, tetraphenylammonium salts, tetrabenzylammonium salts, and trimethylbenzylammonium salts.

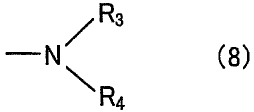

Here, R₃ and R₄ each independently represent a linear or branched alkyl group having 1 to 4 carbon atoms.

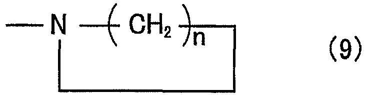

Here, n is an integer of 3 to 5.

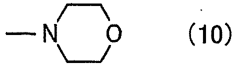

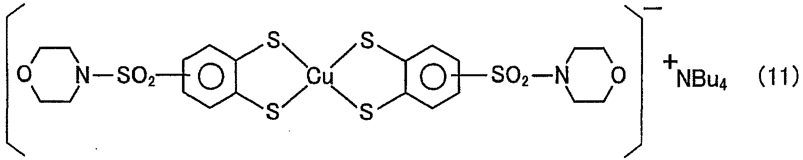

Here, Bu is a linear or branched butyl group.

The organic compound A is solid at ordinary temperature. In the present specification, the term "ordinary temperature" is used to mean a temperature of 25°C. As described above, an ultraviolet absorber that is liquid at ordinary temperature has been conventionally used for an ultraviolet shielding film formed from a solution. In an ultraviolet shielding film formed from a solution obtained by emulsification of such an ultraviolet absorber, the ultraviolet absorber is dispersed in the form of fine droplets. In addition, conventionally, an organic compound that is solid at ordinary temperature is usually introduced into a film after being dissolved in a solvent, in order for the organic compound to be distributed uniformly in the film. This is because a solid organic compound introduced as it is into a film formed on a glass sheet may often deteriorate transparency of the glass article. By contrast, in the present invention, the organic compound A is dispersed in the ultraviolet shielding film in the form of fine particles having an average particle diameter of 150 nm or less. When the organic compound A is pulverized into fine particles having an average particle diameter of 150 nm or less, and then is introduced into a film, the film can be provided with excellent sustainability of the ultraviolet shielding ability without deterioration in transparency. The organic compound A introduced into the film in the above manner is preferably in a crystalline state even in the film. Whether the organic compound A in the film is in a crystalline state can be confirmed by X-ray diffraction.

It is desirable that the organic compound A be introduced into a film as follows: the organic compound A is finely pulverized using a commonly-known dry or wet pulverizer such as a ball mill; a dispersion liquid (fine particle-dispersed composition) in which the finely-pulverized organic compound A is dispersed in a dispersion medium is prepared; and the dispersion liquid is mixed with a film-forming solution prepared separately. Water and lower alcohols are suitable as the dispersion medium, and water is most suitable. Suitable lower alcohols are alcohols having 1 to 3 carbon atoms, such as methanol, ethanol, and isopropanol. A wetting agent, an antiseptic agent, an antifungal agent, an antifoaming agent, a stabilizing agent, or the like, may be added to the dispersion liquid as necessary. In addition, the dispersion liquid may contain other components, such as an organic compound B and a silane coupling agent, which may be added to the ultraviolet shielding film together with the organic compound A. The dispersion liquid may also contain a silicon-containing compound that is a source of the silicon oxide in the film. The dispersion liquid that contains a silicon-containing compound can be used, as it is, as a film-forming solution.

The time taken for the organic compound A to be pulverized into particles having a predetermined average particle diameter depends on the type of the pulverizer, the amount of the organic compound A put into the pulverizer, and pulverization conditions such as rotational speed. Accordingly, in mass production, it is desirable that the time taken to achieve the predetermined average particle diameter be determined in advance by repeating the steps of: pulverizing a material with a pulverizer; stopping pulverization and taking a sample of the pulverized material; and measuring the average particle diameter of the sample of the pulverized material. At the time of pulverization, a surfactant, a water-soluble resin, or the like, may be added as appropriate to the organic compound A to be pulverized.

It is desirable that the organic compound A be dispersed in the film in the form of fine particles having an average particle diameter of 150 nm or less, preferably 10 nm to 150 nm, more preferably 50 nm to 140 nm, particularly preferably 70 nm to 140 nm. Also for preparation of a fine particle-dispersed liquid (fine particle-dispersed composition), it is preferable to previously pulverize the organic compound A into fine particles having an average particle diameter within the range specified above. A too large average particle diameter of the fine particles results in reduction in the transparency of the film, whereas a too small average particle diameter may lead to deterioration in the ultraviolet absorbing ability or to reduction in the sustainability of the ultraviolet absorbing ability. The value of the "average particle diameter" is a numerical value based on measurement using a dynamic light scattering method which is a type of photon correlation method. The same applies to measurement values in the description of Examples given below. Specifically, the "average particle diameter" means a particle diameter that corresponds to a cumulative frequency of 50% in the distribution of equivalent spherical diameters based on the particle volumes. For example, the "average particle diameter" can be measured using "Microtrac Ultrafine Particle Analyzer 9340-UPA 150" manufactured by Nikkiso Co., Ltd.

The presence of the fine particles of the organic compound A dispersed in the film can be confirmed by observation using a scanning electron microscope (SEM) or a transmission electron microscope (TEM). An average value A of the top 10% of the respective maximum lengths of the fine particles present in a cross-section of the film observed with a SEM or a TEM is not below the value of the "average particle diameter" defined as above. Accordingly, when the average value A is 150 nm or less, the "average particle diameter" can be determined to be 150 nm or less. In addition, for the fine particles present in the cross-section of the film, an average value B of the bottom 10% of the lengths of the fine particles in directions orthogonal to directions along which the respective maximum lengths are defined, is not above the value of the "average particle diameter" defined as above. Accordingly, when the average value B is, for example, 50 nm or more, the "average particle diameter" can be determined to be 50 nm or more.

The organic compound A can be introduced into the film in the form of a solute dissolved in an organic solvent capable of dissolving the organic compound A. However, such an introduction method does not provide sufficient improvement in the sustainability of the ultraviolet shielding ability. By introducing the organic compound A into the film in the form of fine particles, the sustainability of the ultraviolet shielding ability of the film is improved. In addition, it has been found that more preferable spectral absorption characteristics can be obtained by adding the organic compound A in the form of fine particles than by adding the organic compound A in the form of a solute.

Specifically, the absorption peak of the organic compound A in a spectral absorbance curve can be shifted to a longer wavelength when the organic compound A is added in the form of fine particles than when the organic compound A is added in in the form of a solute. By taking advantage of this fact, it is possible to effectively shield against ultraviolet light in an ultraviolet region very near the visible region, that is, ultraviolet light having a wavelength of about 380 nm to 390 nm. According to a preferred embodiment of the present invention, a dispersion liquid (fine particle-dispersed composition) for forming an ultraviolet shielding film can be provided, the dispersion liquid having an absorbance of 0.20 or more at a wavelength of 390 nm and having an absorbance of 0.18 or less at a wavelength of 400 nm when the absorbances are measured under conditions that the content of the ultraviolet shielding component (organic compound A in the form of fine particles) is 0.002% by weight, and an optical path length is 1 cm. The absorbance at a wavelength of 390 nm is more preferably 0.21 or more. The absorbance at a wavelength of 400 nm is preferably 0.15 or less, more preferably 0.10 or less, and particularly preferably 0.08 or less. In addition, the absorbance at a wavelength of 380 nm is preferably 0.40 or more, more preferably 0.50 or more, and particularly preferably 0.60 or more.

Even when an ultraviolet absorber exhibiting excellent absorption properties at long wavelengths in the ultraviolet region is used, it is not easy to adjust spectral absorption characteristics so as to allow transmittance of a sufficient amount of light having a wavelength of around 400 nm while shielding against light having a wavelength of around 390 nm. As described above, it is sometimes required to shield against light having a wavelength of around 400 nm. The coloring of the film caused by shielding against light having such a wavelength may lead to problems. In the case where prevention of the coloring of the film should be given priority, if the content of the ultraviolet absorber is set low to reduce the absorbance at a wavelength of 400 nm, the absorbance in the wavelength range from 380 nm to 390 nm is also reduced. An ideal ultraviolet absorber that exhibits a high absorbance at wavelengths of around 380 nm and that also exhibits a significant drop of absorbance at a wavelength of 380 nm to 400 nm, is not commonly known. However, an ultraviolet shielding film exhibiting a high absorbance at a wavelength of 390 nm and exhibiting a low absorbance at a wavelength of 400 nm can be obtained by adding an existing ultraviolet absorber in the form of fine particles having an average particle diameter of 150 nm or less, and thus by shifting the absorption peak of the absorber to a longer wavelength.

The degree of shift of the absorption peak of the organic compound A varies depending of the type of the organic compound A. According to the study of the present inventors, the organic compound α allows for a particularly large shift. In the spectral absorbance curve that is measured for a dispersion liquid by applying the aforementioned measurement conditions (content: 0.002% by weight, optical path length: 1 cm), the absorption peak of the organic compound α added in the form of fine particles can be located at a wavelength which is 8 nm or more longer than a wavelength at which the absorption peak of the organic compound α added in the form of a solute is located. In addition to this, the absorbance at the absorption peak of the organic compound α added in the form of fine particles may be 0.05 or more higher, or 0.07 or more higher than the absorbance at the absorption peak of the organic compound α added in the form of a solute.

When the content of the organic compound A in a dispersion liquid that is a sample whose absorbance is to be measured does not meet the aforementioned measurement conditions (0.002% by weight), the measurement may be performed after the content of the organic compound A is adjusted, that is, after a dispersion medium of the dispersion liquid is added to the sample to reduce the content of the organic compound A, or after part of the dispersion medium is removed from the sample to increase the content of the organic compound A. The reason why the measurement is performed under the condition of a low content as specified above is that the peak absorbance in a wavelength range from 350 nm to 400 nm is taken into account.

The organic compound A is contained in an amount of, expressed by weight, preferably 1% to 80%, more preferably 5% to 60%, particularly preferably 5% to 50%, more particularly preferably 7% to 30%, relative to the amount of the silicon oxide (calculated as the amount of SiO₂) in the film. In view of this, the organic compound A is added in an amount of, similarly expressed by weight, preferably 0.5% to 25%, and more preferably 0.5% to 15%, relative to the amount of the film-forming solution.

The organic compound B is a component that interacts with the organic compound A (benzotriazole-based ultraviolet absorber) to contribute to improvement in the dispersibility of the organic compound A in the film, to enhance the light shielding ability of the organic compound A, and also to prevent the degradation of the organic compound A. In some cases where the ultraviolet shielding film 2 having a relatively large thickness (e.g., a thickness more than 300 nm, or even a thickness of 500 nm or more) is formed by a liquid-phase film formation such as by a sol-gel method, cracks occur due to evaporation of the liquid component contained in the film-forming solution. The organic compound B also functions as a component that allows a thick film to be formed without occurrence of cracks.

The organic compound B is preferably at least one selected from polyether compounds, polyol compounds, polyvinylpyrrolidones, and polyvinylcaprolactams. The organic compound B may be a polyether compound such as a polyether-type surfactant or may be a polyol compound such as polycaprolactone polyol and bisphenol A polyol. The organic compound B may also be polyethylene glycol, polypropylene glycol, or the like. The polyether compound means a compound containing two or more ether bonds, and the polyol compound means a polyhydric alcohol such as a diol and a triol. The polyvinylpyrrolidones specifically include polyvinylpyrrolidone and derivatives thereof, and the polyvinylcaprolactams specifically include polyvinylcaprolactam and derivatives thereof.

The organic compound B is preferably added to the film in an amount of, expressed by weight, 0% to 75%, particularly 0.05% to 50%, more particularly 0.1% to 40%, even more particularly 1% to 30%, 10% or less in some cases, and 7% or less as necessary, relative to the amount of the silicon oxide (calculated as the amount of SiO₂) in the film. When the amount of the organic compound A is large, the amount of the organic compound B may be reduced as a function of the amount of the organic compound A.

The type of the silane coupling agent is not particularly limited. The silane coupling agent is preferably an organic compound represented by RSiX₃ (where R is an organic functional group including at least one selected from a vinyl group, a glycidoxy group, a methacryl group, an amino group, and a mercapto group, and X is a halogen atom or an alkoxy group). The groups R and X of the silane coupling agent react with an organic compound and an inorganic compound, respectively. The reaction of the silane coupling agent contributes to improvement in the dispersibility of the organic compound A in the film, and provides the effect of allowing a thick film to be formed without occurrence of cracks. The silane coupling agent is preferably added to the film in an amount of, expressed by mol, 0% to 40%, preferably 0.1% to 20%, more preferably 1% to 10%, relative to the amount of the silicon oxide (calculated as the amount of SiO₂) in the film.

The ultraviolet shielding film according to the present invention may contain a functional component other than the organic compound A, the organic compound B, and the silane coupling agent. Examples of a component preferably added to the ultraviolet shielding film include fine particles of indium tin oxide (ITO) which is known as a near-infrared absorber.

It is desirable that the ITO fine particles be dispersed in the film in the form of fine particles having an average particle diameter of 200 nm or less, preferably 5 nm to 150 nm. Similar to the case of the fine particles of the organic compound A, the transparency of the film is reduced when the particle diameter of the ITO fine particles is too large, whereas sufficient effect of the addition of the ITO fine particles cannot be obtained when the particle diameter is too small. It is desirable that a dispersion liquid of the ITO fine particles be prepared in advance, and then the dispersion liquid be added to the film-forming solution.

The ultraviolet shielding film 2 contains a silicon oxide as an inorganic component. The ultraviolet shielding film 2 may also contain an inorganic component other than the silicon oxide. Examples of the inorganic component other than the silicon oxide include not only the aforementioned ITO fine particles but also components (e.g., chlorine, nitrogen, and sulfur atoms) derived from an acidic catalyst used in a sol-gel method. The silicon oxide to be contained in the ultraviolet shielding film 2 is added to the film-forming solution.in the form of a silicon-containing compound (silicon compound) such as silicon alkoxide.

It is desirable that the silicon oxide in the ultraviolet shielding film 2 account for, expressed by weight, 30% or more, preferably 40% or more, even more preferably 50% or more (in this case, the silicon oxide is a main component of the film) of the total weight of the film. In some cases, the silicon oxide desirably accounts for 70% by weight or more of the total weight of the film. Preferably, the ultraviolet shielding film 2 contains the silicon oxide as a main component, and has a structure in which the fine particles of the organic compound A and other components are dispersed in the network of Si-O bonds. The film having such a structure is suitable for outdoor use, such as use in a window glass.

Hereinafter, a preferable method for forming the ultraviolet shielding film 2 by a sol-gel method will be described.

An organic solvent used in the sol-gel method needs to be highly compatible with silicon alkoxide and water, and to be capable of allowing sol-gel reaction to proceed. A lower alcohol having 1 to 3 carbon atoms is suitable. The silicon alkoxide used is not particularly limited, and may be silicon tetramethoxide, silicon tetraethoxide (TEOS), silicon tetraisopropoxide, or the like. A hydrolysate of silicon alkoxide may also be used as a silicon source. The concentration of the silicon alkoxide in the solution for film formation by the sol-gel method, expressed by weight, is preferably 3% to 15%, and particularly preferably 3% to 13%, in terms of SiO₂ concentration where the silicon alkoxide is converted into SiO₂. When the concentration is too high, cracks may occur in the film.

The suitable molar ratio of water to the silicon alkoxide is 4 or more, specifically 4 to 40, and preferably 4 to 35. An acidic catalyst is used as a hydrolysis catalyst, and in particular, a strong acid such as hydrochloric acid, nitric acid, sulfuric acid, trichloroacetic acid, trifluoroacetic acid, methanesulfonic acid, and paratoluenesulfonic acid is preferably used. An inorganic acid is preferable as the acidic catalyst, since an organic compound derived from an acidic catalyst may reduce the hardness of the film. Hydrochloric acid is the most preferable acidic catalyst, since hydrochloric acid is highly volatile and is less likely to remain in the film. The concentration of the acidic catalyst is preferably in a range of 0.001 mol/kg to 2 mol/kg in terms of the molality of protons, when it is assumed that protons are completely dissociated from the acid.

When water is added in an excess amount as described above, and the acidic catalyst is added at a concentration as described above, a film having a relatively large thickness can easily be formed, in a temperature range where decomposition of the organic materials can be prevented, by the sol-gel method as taught in Patent Literature 2.

When the solution for film formation by the sol-gel method contains the aforementioned components, an ultraviolet shielding film-forming solution can be prepared by mixing the solution for film formation with a dispersion liquid in which fine particles of the organic compound A are dispersed, and then by adding the organic compound B or the like as necessary. However, the method for preparing the ultraviolet shielding film-forming solution is not limited to the above method. Components necessary for film formation by the sol-gel method may be added to a fine particle-dispersed liquid. Alternatively, a film may be formed by a method different from the sol-gel method, and a film-forming solution that contains the fine particles of the organic compound A and components (e.g., polysilazane) necessary for the different method may be prepared.

In the step of applying the film-forming solution, the relative humidity of the atmosphere is preferably maintained below 40%, and is more preferably maintained at 30% or lower. Maintaining a low relative humidity can prevent the film from excessively absorbing moisture from the atmosphere. If the film absorbs a large amount of moisture from the atmosphere, there is a risk that the moisture entering into and remaining in the matrix of the film reduces the strength of the film.

The step of drying the film-forming solution preferably includes: an air drying step performed in an environment where the application step has been performed; and a heat drying step involving heating. The air drying step is desirably carried out by exposing the coating formed of the film-forming solution to the atmosphere whose relative humidity is maintained below 40% or is maintained at 30% or lower. During the heat drying step, condensation polymerization of silanol groups produced by hydrolysis proceeds, a liquid component, particularly water, remaining in the film is progressively removed, and the matrix of the silicon oxide (network of Si-O bonds) develops. The heat drying step is desirably carried out by exposing the coating to the atmosphere having a temperature of 300°C or lower, for example, a temperature of 100°C to 200°C.

The glass article of the present invention can be obtained by a liquid-phase film formation method including carrying out the above-described sequential steps of: a) preparing an ultraviolet shielding film-forming solution containing fine particles of the organic compound A and other components; b) applying the film-forming solution onto a glass sheet; and c) drying the film-forming solution.

This production method is a method for producing a glass article having an ultraviolet shielding film, the method including the steps of: preparing an ultraviolet shielding film-forming solution containing a silicon-containing compound such as silicon alkoxide in the form of a solute and containing the organic compound A in the form of fine particles having an average particle diameter of 150 nm or less, the organic compound A being solid at ordinary temperature and having an average molecular weight of 5,000 or less; applying the film-forming solution onto a glass sheet; and drying the film-forming solution on the glass sheet to form an ultraviolet shielding film. The production method is one aspect of the present invention. With the production method, a film-forming solution can be prepared using a fine particle-dispersed composition (fine particle-dispersed liquid) of the present invention. In addition, the production method may further include the step of pulverizing the organic compound A that is solid into fine particles having an average particle diameter of 150 nm or less.

The thickness of the ultraviolet shielding film is preferably more than 300 nm and 15 µm or less, more preferably 500 nm or more and 10 µm or less, and particularly preferably 1,000 nm or more and 5,000 nm or less. When the film is too thin, sufficient ultraviolet shielding ability may not be obtained. When the film is too thick, the transmittance of the film is reduced, which may lead to deterioration in the transparency of the article.

The glass sheet 1 used is not particularly limited, and is preferably a soda lime silicate glass sheet having a composition having an increased concentration of Fe₂O₃ and, as necessary, other additional ultraviolet absorbing components such as TiO₂ and CeO₂.

Suitable as the glass sheet 1 is a soda lime silicate glass sheet that has a glass composition containing Fe₂O₃ in an amount of 0.2% by weight or more, preferably 0.5% by weight or more, that has a light transmittance of 70% or less, preferably 50% or less, at a wavelength of 380 nm, and that has a light transmittance of 75% or more at a wavelength of 550 nm. As a matter of course, a soda lime silicate glass sheet containing Fe₂O₃ in an amount of 0.1% by weight or less, preferably 0.02% by weight to 0.06% by weight, can also be used. In the above description, the concentration of Fe₂O₃ is a numerical value calculated by converting the total amount of all the iron oxides contained in the glass sheet (FeO is also present in the glass) into the amount of Fe₂O₃.

The glass sheet 1 is not limited to the above glass sheets, and may be a glass sheet having a low transmittance for light in the visible region. Examples of such a glass sheet include glass sheets manufactured for use as window glasses of vehicles and having a light transmittance of 20% to 60% at a wavelength of 550 nm. It is difficult to sufficiently shield against, in particular, long-wavelength ultraviolet light only by the components constituting the glass sheet. Accordingly, the use of the ultraviolet shielding film 2 described above is effective also for a glass sheet having a low visible light transmittance.

As can be confirmed from the experimental results in the description of Examples, a preferred embodiment of the present invention can provide a glass article that has such ultraviolet shielding ability that an ultraviolet transmittance (TUV 380) based on ISO 9050 (1990) is 5% or less, preferably 3% or less, more preferably 2% or less, even more preferably 1.5% or less, and particularly preferably 1% or less. In addition, by using the organic compound A exhibiting excellent shielding ability at a wavelength of around 400 nm, or by taking advantage of the absorption peak shift resulting from adding the organic compound A in the form of fine particles, it is possible to provide a glass article that has such ultraviolet shielding ability that an ultraviolet transmittance TUV 400 calculated in accordance with ISO 13837 (convention A) is 5% or less, preferably 3% or less, more preferably 2% or less, even more preferably 1.5% or less, and particularly preferably 1% or less. Furthermore, a preferred embodiment of the present invention can provide a glass article that has the ultraviolet shielding ability as described above, that also has a light transmittance at a wavelength of 550 nm (T 550) higher than 70%, and that further has a visible light transmittance YA higher than 70%. A preferred embodiment of the present invention can provide, for example, a glass article having an ultraviolet transmittance (TUV 380) of 2% or less and having a light transmittance at a wavelength of 550 nm (T 550) higher than 70%. In addition, a preferred embodiment of the present invention can provide, for example, a glass article having an ultraviolet transmittance (TUV 380) and a light transmittance (T 550) within the ranges specified above and having a haze ratio of 4% or less, preferably 3% or less, more preferably 1.5% or less.

Furthermore, a preferred embodiment of the present invention can provide a glass article including a glass sheet and an ultraviolet shielding film containing an ultraviolet absorber to the extent that the ultraviolet shielding ability as described above is achieved, the ultraviolet shielding film being prevented from peeling off from the glass sheet even after Taber abrasion test is performed by a load of 500 g and 1000 cycles of rotation in accordance with Japanese Industrial Standards (JIS) R 3221. In particular, a glass article can be provided which includes an ultraviolet shielding film having such an excellent abrasion resistance that increase in the haze ratio caused by the above test can be limited to 3% or less.

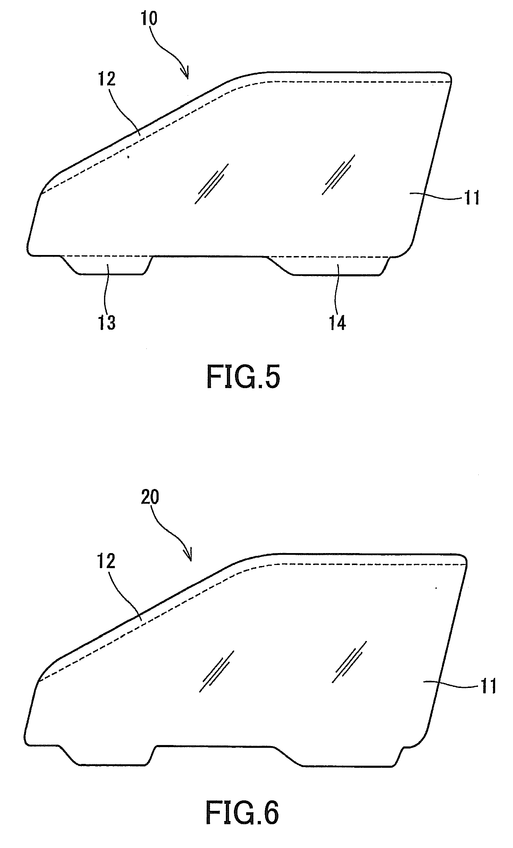

The glass article having ultraviolet shielding ability according to the present invention is suitable for use as a window glass for a building or a vehicle, particularly for an automobile. When the glass article is used as a window glass capable of moving upward and downward (capable of being opened and closed), as typified by a door glass of an automobile, the surface of the edge portion of the glass sheet repeatedly contacts an end portion holding member called a run channel or the like. Accordingly, there is a risk that the film is peeled during a long period of use, and the appearance of the window glass is deteriorated. In such a use as a window glass, therefore, it is preferable that, as shown in FIGS. 5 and 6, an ultraviolet shielding film 11 should not be formed in an edge region 12 in a glass sheet of a window glass 10 or 20. In addition, in the case where the presence of the ultraviolet shielding film 11 makes it difficult to hold the door glass stably by means of an elevator member, it is preferable that, as shown in FIG. 5, the ultraviolet shielding film 11 should not be formed in bottom regions 13 and 14 for connection to the elevator member. However, depending on the method for connection between the elevator member and the door glass, or on the type of the film, formation of the film in the bottom regions 13 and 14 may cause no problem in the connection. Generally, a film that contacts water at an angle of 50 degrees or less gives a small influence on the connection. In such a case, it is not necessary to exclude the ultraviolet shielding film 11 from the bottom regions 13 and 14 (FIG. 6). As described above, the ultraviolet shielding film 11 may not be formed in a portion of the surface of the glass sheet, particularly in the edge portion that contacts another member. Also in this case, however, in order to shield against ultraviolet light, the ultraviolet shielding film 11 should be formed over the entire surface of the main region of the glass sheet that separates the inside and outside of the compartment.

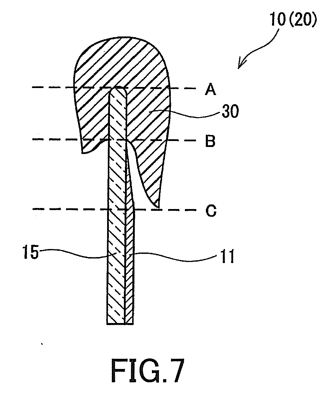

In the case where a region in which no film is formed is secured in a portion of the surface of the glass sheet, the ultraviolet shielding film is preferably formed in such a manner that the thickness of the film gradually decreases from the main region in which the film is formed to the edge region in which the film is not formed. When the film is formed in this manner, the boundary between the region in which the film is formed and the region in which the film is not formed is inconspicuous, and degradation of appearance can be prevented. FIG. 7 shows an example of a window glass (door glass) having a region in which the thickness of the film gradually decreases. In the embodiment shown in FIG. 7, the window glass 10 or 20 used as a door glass is closed, and the ultraviolet shielding film 11 having a predetermined thickness appropriate for ultraviolet shielding is formed on the compartment-side surface of the glass sheet 15 that forms the main region of the window glass 10 or 20 through which outside light including ultraviolet light transmits from the outside (the left side of FIG. 7) of the compartment to the inside (the right side of FIG. 7) of the compartment. In the surface of the glass sheet 15, the ultraviolet shielding film 11 is not formed in the edge region which extends from an end portion A of the glass sheet to a boundary B and at which the glass sheet 15 contacts a run channel 30. The ultraviolet shielding film 11 is formed in such a manner that the thickness of the film gradually becomes smaller from the boundary C toward the boundary B. FIG. 7 shows an embodiment in which the end of the run channel 30 coincides with the boundary C, where an ultraviolet shielding film having a uniform thickness is formed over the entirety of the surface of the glass sheet that is exposed without being covered with the run channel. However, the end of the run channel 30 and the boundary C need not coincide with each other as long as a desired ultraviolet shielding ability can be obtained in the main region of the window glass 10 or 20. In addition, the gradually-decreasing film thickness may become zero at a position slightly away from the boundary B and closer to the boundary C as shown in FIG. 7, or the position at which the film thickness becomes zero may coincide with the boundary B. Although door glasses in each of which no film is formed in the edge region of the glass sheet are shown in FIG. 5 to FIG. 7, it should be understood that the glass article of the present invention is not limited to such embodiments. Even in the case of use as a door glass, the ultraviolet shielding film may be formed over the entire surface of the glass sheet, or the film may be formed in the edge region 12 that contacts the end portion holding member and not in the bottom regions 13 and 14.

### EXAMPLES

Hereinafter, the present invention will be described more specifically with reference to Examples. First, a description will be given of the details of the tests carried out to evaluate the characteristics of samples (ultraviolet shielding film-coated glass sheets) fabricated in Examples and Comparative Examples.

### <Optical properties>

The optical properties were measured using a spectrophotometer (UV-3100PC manufactured by Shimadzu Corporation). The transmittances measured include: a transmittance at a wavelength of 550 nm; a transmittance at a wavelength of 1550 nm; a visible light transmittance YA; an ultraviolet transmittance TUV 380 calculated in accordance with ISO 9050 (1990); and an ultraviolet transmittance TUV 400 calculated in accordance with ISO 13837 (convention A). The TUV 380 is a value calculated based on light transmittances at wavelengths of 280 nm to 380 nm, and the TUV 400 is a value calculated based on light transmittances at wavelengths of 300 nm to 400 nm. In addition, haze ratios were measured using HZ-1S manufactured by Suga Test Instruments Co., Ltd.

### <Abrasion resistance>

The abrasion resistance of each film was evaluated by an abrasion test complying with JIS R 3221. To be specific, haze ratios were measured before and after the abrasion test in which 1000 cycles of abrasion were performed with a load of 500 g using a commercially-available Taber abrasion tester (ABRASER 5150 manufactured by TABER INDUSTRIES). The haze ratios were measured using the same apparatus as described above.

### <Light resistance (Ultraviolet resistant property)>

The light resistance (ultraviolet resistant property) was evaluated by carrying out an ultraviolet irradiation test using an ultraviolet irradiator manufactured by IWASAKI ELECTRIC CO., LTD. (EYE SUPER UV TESTER SUV-W13) under the conditions that the wavelengths ranged from 295 nm to 450 nm, the intensity of illumination was 76 mW/cm², the black panel temperature was 83°C, and the humidity was 50% RH. The ultraviolet irradiation test was carried out by applying ultraviolet light for a predetermined time (10 hours, 64 hours, or 100 hours) to that surface of the ultraviolet shielding film-coated glass sheet on which the film is not formed. The optical properties (TUV 380 and TUV 400) were measured after the ultraviolet irradiation test, and the differences between before and after the test were calculated.

### (Example A1)

A dispersion liquid (ultraviolet absorber content: 10% by weight, average particle diameter: 110 nm) was prepared. In the dispersion liquid, water was contained as a dispersion medium, and a benzotriazole-based ultraviolet absorber represented by the formula (4) where R₁ and R₂ are each a 1,1,3,3-tetramethylbutyl group ("TINUVIN 360" manufactured by Ciba Specialty Chemicals; the organic compound α) was contained as a dispersoid. In advance of using the benzotriazole-based ultraviolet absorber, the benzotriazole-based ultraviolet absorber was mixed with zirconia beads and pulverized using a paint conditioner so that the average particle diameter specified above was achieved. The ultraviolet absorber-dispersed liquid, pure water, ethyl alcohol (manufactured by KATAYAMA CHEMICAL INDUSTRIES Co., Ltd.), a triol formed by addition reaction of propylene oxide with glycerin (G-300 manufactured by ADEKA; average molecular weight: 300; the organic compound B), tetraethoxysilane (TEOS; manufactured by Shin-Etsu Chemical Co., Ltd.), and concentrated hydrochloric acid (manufactured by KANTO CHEMICAL CO., INC.; 35% by weight), were mixed and stirred to obtain an ultraviolet shielding film-forming solution. The film-forming solution was prepared so that the concentrations (contents) of the components were set to values shown in Table 1. Table 1 also shows the concentrations of the components in the film-forming solutions prepared in Examples A2 to A12 and Comparative Example A1.

Next, the film-forming solution was applied onto a cleaned soda lime silicate glass sheet (UV-cut green glass manufactured by Nippon Sheet Glass Co., Ltd.; size: 100 mm × 100mm; thickness: 3.1 mm) by a flow coating method at room temperature at a humidity of 30%. After being left for about 5 minutes at room temperature for drying, the glass sheet was put into an oven whose temperature had been previously increased up to 200°C, was heated for 15 minutes, and then was cooled to form an ultraviolet shielding film. The UV-cut green glass used has a light transmittance (T 380) of 40% at a wavelength of 380 nm, and has a light transmittance (T 550) of 77% at a wavelength of 550 nm. The total content of all iron oxides in the UV-cut green glass sheet is about 0.9% by weight in terms of Fe₂O₃ content.

The above-described measurements were carried out for the ultraviolet shielding film-coated glass sheet thus obtained. The results are shown in Table 2. Table 2 also shows the results of measurements carried out for the ultraviolet shielding film-coated glass sheets fabricated in Examples A2 to A12 and Comparative Example A1.

### (Examples A2 to A12)

Ultraviolet shielding film-coated glass sheets were obtained in the same manner as in Example A1, except that the concentrations of the components in the film-forming solution and the average particle diameter of the ultraviolet absorber were changed as shown in Table 1. In Examples A8 to A12, glycidoxypropyltrimethoxysilane (GPTMS; 3-glycidoxypropyltrimethoxysilane manufactured by Shin-Etsu Chemical Co., Ltd.) serving as a silane coupling agent was further added to the film-forming solution.

### (Comparative Example A1)

Abenzotriazole-based ultraviolet absorber ("TINUVIN 1130" manufactured by Ciba Specialty Chemicals) that is liquid at ordinary temperature, a cyanine-based (zenzoxazolium-based) organic coloring agent, ethyl alcohol (manufactured by KATAYAMA CHEMICAL INDUSTRIES Co., Ltd.), tetraethoxysilane (manufactured by Shin-Etsu Chemical Co., Ltd.), and concentrated hydrochloric acid (35% by weight), were mixed at concentrations shown in Table 1, and were stirred to obtain a film-forming solution. The film-forming solution is an emulsion containing the benzotriazole-based ultraviolet absorber. Next, an ultraviolet shielding film-coated glass sheet was obtained using the film-forming solution in the same manner as in Example A1. The cyanine-based organic coloring agent was soluble in ethyl alcohol, and was present in the form of a solute in the film-forming solution.

### (Examples A21 to A23)

In Examples A21 to A23, ITO fine particles were further added as functional fine particles.

The ultraviolet absorber-dispersed liquid used in Example A1, pure water, ethyl alcohol (manufactured by KATAYAMA CHEMICAL INDUSTRIES Co., Ltd.), a polyether compound (polyether phosphate ester-based polymer; Solsperse 41000 manufactured by Lubrizol Japan Limited; the organic compound B), tetraethoxysilane (TEOS; manufactured by Shin-Etsu Chemical Co., Ltd.), and concentrated hydrochloric acid (manufactured by KANTO CHEMICAL CO., INC.; 35% by weight), were mixed and stirred. Furthermore, an ITO fine particle-dispersed liquid (an ethyl alcohol solution containing 40% by weight of ITO fine particles; manufactured by Mitsubishi Materials Corporation; (publicly-announced) average particle diameter: 100 nm or less) was added, followed by further stirring to obtain a film-forming solution for forming a film that shields against infrared light as well as ultraviolet light. The film-forming solution was prepared so that the concentrations (contents) of the components were set to values shown in Table 3. In Example A23, as a polyether compound, polyethylene glycol (PEG 200 manufactured by KANTO CHEMICAL CO., INC.) was added along with Solsperse 41000.

Next, the film-forming solution and the soda lime silicate glass substrate used in Example A1 were used, and an ultraviolet shielding film (ultraviolet-infrared shielding film) was formed on the substrate.

The above-described measurements were carried out for the ultraviolet shielding film-coated glass sheet thus obtained. The results are shown in Table 4.

### (Example B1)

A dispersion liquid (copper complex content: 2% by weight, average particle diameter: 135 nm) was prepared. In the dispersion liquid, water was contained as a dispersion medium, and a commercially-available anti-oxidizing agent having a structure represented by the formula (11) where Bu is a n-butyl group (benzenethiol-copper complex derivative; (bis(4-morpholinosulfonyl-1,2-dithiophenolate)-copper tetra-n-butylammonium); EST-5 manufactured by Sumitomo Seika Chemicals Co., Ltd.; the organic compound β) was contained as a dispersoid. In advance of using the anti-oxidizing agent, the anti-oxidizing was mixed with zirconia beads and pulverized using a paint conditioner so that the average particle diameter specified above was achieved. The benzenethiol-copper complex-dispersed liquid, pure water, ethyl alcohol (manufactured by KATAYAMA CHEMICAL INDUSTRIES Co., Ltd.), a polyether compound (polyether phosphate ester-based polymer; Solsperse 41000 manufactured by Lubrizol Japan Limited), tetraethoxysilane (TEOS; manufactured by Shin-Etsu Chemical Co., Ltd.), and concentrated hydrochloric acid (35% by weight, manufactured by KANTO CHEMICAL CO., INC.), were mixed and stirred to obtain an ultraviolet shielding film-forming solution. The film-forming solution was prepared so that the concentrations (contents) of the components were set to values shown in Table 5. Table 5 also shows the concentrations of the components in the film-forming solutions prepared in Examples B2 to B6 and Comparative Examples B1 to B4.

Next, the film-forming solution and the soda lime silicate glass substrate used in Example A1 were used, and an ultraviolet shielding film was formed on the substrate in the same manner as in Example A1.

The above-described measurements were carried out for the ultraviolet shielding film-coated glass sheet thus obtained. The results are shown in Table 6. Table 6 also shows the results of measurements carried out for the ultraviolet shielding film-coated glass sheets fabricated in Examples B2 to B6 and Comparative Examples B1 to B4.

### (Examples B2 to B6)

Ultraviolet shielding film-coated glass sheets were obtained in the same manner as in Example B1, except that the components in the film-forming solution, the concentrations of the components, and the average particle diameter of the ultraviolet absorber were changed as shown in Table 5. In Examples B4 and B5, the aforementioned ITO fine particle-dispersed liquid was used to add ITO fine particles to the film. In addition, in Example B6, paratoluenesulfonic acid was used in place of concentrated hydrochloric acid, and tetrahydrofuran (THF) and the aforementioned GPTMS were further added.

### (Comparative Examples B1 and B3)

Ultraviolet shielding film-coated glass sheets were obtained in the same manner as in Example B1, except that the concentrations of the components in the film-forming solution and the average particle diameter of the benzenethiol-copper complex derivative were changed. In Example B3, the aforementioned ITO fine particle-dispersed liquid was used to add ITO fine particles to the film.

### (Comparative Examples B2 and B4)

Ultraviolet shielding film-coated glass sheets were obtained in the same manner as in Example B1, except that the concentrations of the components in the film-forming solution were changed, and that the aforementioned commercially-available anti-oxidizing agent (benzenethiol-copper complex derivative; EST-5 manufactured by Sumitomo Seika Chemicals Co., Ltd.) was added not in the form of a dispersoid in a dispersion liquid but in the form of a solute dissolved in an organic solvent (acetone). In Comparative Example B4, the aforementioned ITO fine particle-dispersed liquid was used to add ITO fine particles to the film.

### (Comparative Example C1)

A commercially-available dispersion liquid ("UVA-383MG" manufactured by BASF; ultraviolet absorber content: 30% by weight) was prepared. In the dispersion liquid, water was contained as a dispersion medium, and a high-molecular-weight ultraviolet absorber (benzophenone-based ultraviolet absorber) having a molecular weight higher than 1,000,000 was contained as a dispersoid. The average particle diameter of the high-molecular-weight ultraviolet absorber contained in the dispersion liquid was 100 nm or less. The high-molecular-weight ultraviolet absorber-dispersed liquid, pure water, ethyl alcohol (manufactured by KATAYAMA CHEMICAL INDUSTRIES Co., Ltd.), a polyether compound (polyether phosphate ester-based polymer; Solsperse 41000 manufactured by Lubrizol Japan Limited), tetraethoxysilane (TEOS; manufactured by Shin-Etsu Chemical Co., Ltd.), and concentrated hydrochloric acid (35% by weight, manufactured by KANTO CHEMICAL CO., INC.), were mixed and stirred to obtain an ultraviolet shielding film-forming solution. The film-forming solution was prepared so that the concentrations (contents) of the components were set to values shown in Table 7. Table 7 also shows the concentrations of the components in the film-forming solution prepared in Comparative Example C2.

Next, the film-forming solution and the soda lime silicate glass substrate used in Example A1 were used, and an ultraviolet shielding film was formed on the substrate in the same manner as in Example A1.

The above-described measurements were carried out for the ultraviolet shielding film-coated glass sheet thus obtained. The results are shown in Table 8. Table 8 also shows the results of measurements carried out for the ultraviolet shielding film-coated glass sheet fabricated in Comparative Example C2. In Comparative Examples C1 and C2, sufficiently low values of TUV 380 were not obtained, and therefore, the ultraviolet resistance property was not measured.

### (Comparative Example C2)

An ultraviolet shielding film-coated glass sheet was obtained in the same manner as in Comparative Example C1, except that the high-molecular-weight ultraviolet absorber-dispersed liquid used was a dispersion liquid ("UVA-1383MG" manufactured by BASF; ultraviolet absorber content: 30% by weight) that contained water as a dispersion medium and that contained, as a dispersoid, a high-molecular-weight ultraviolet absorber (benzotriazole-based ultraviolet absorber) having a molecular weight higher than 1,000,000. The average particle diameter of the high-molecular-weight ultraviolet absorber contained in the dispersion liquid was 100 nm or less.

**[Table 1]**

| Amounts of components contained in film-forming solutions | | | | | | | |
|---|---|---|---|---|---|---|---|
| | Organic compound A (solid benzotriazole-based ultraviolet absorber; TINUVIN 360) | | Organic compound B (Polyol; G-300) (wt%) | Silane coupling agent (GPTMS; ratio to the amount of SiO₂) (wt%) | Silicon alkoxide (TEOS; calculated as the amount of SiO₂) (wt%) | Water (ratio to the amount of Si) (molar ratio) | Concentrated hydrochloric acid (wt%) |
| | Added amount (solid contents) (wt%) | Average particle diameter (nm) | | | | | |
| Example A1 | 2.0 (22.2) | 100 | 0.5 (5.6) | 0 | 9 | 18 | 0.05 |
| Example A2 | 1.75 (19.4) | 100 | 0.5 (5.6) | 0 | 9 | 19 | 0.05 |
| Example A3 | 1.5 (16.7) | 100 | 0.5 (5.6) | 0 | 9 | 18 | 0.05 |
| Example A4 | 1.5 (16.7) | 100 | 1.0 (11.1) | 0 | 9 | 18 | 0.05 |
| Example A5 | 1.5 (16.7) | 100 | 2.0 (22.2) | 0 | 9 | 18 | 0.05 |
| Example A6 | 1.5 (16.7) | 100 | 0 (0) | 0 | 7 | 18 | 0.05 |
| Example A7 | 1.25 (13.9) | 100 | 0.45 (5.0) | 0 | 9 | 18 | 0.05 |
| Example A8 | 1.25 (13.9) | 100 | 0.45 (5.0) | 5 | 9 | 18 | 0.05 |
| Example A9 | 1.25 (13.9) | 50 | 0.45 (5.0) | 5 | 9 | 18 | 0.025 |
| Example A10 | 1.25 (13.9) | 15 | 0.45 (5.0) | 5 | 9 | 18 | 0.025 |
| Example A11 | 1.25 (13.9) | 15 | 0.45 (5.0) | 5 | 9 | 18 | 0.025 |
| Example A12 | 1.25 (13.9) | 15 | 0.27 (3.0) | 5 | 9 | 18 | 0.025 |
| Comparative Example A1 | Liquid benzotriazole-based ultraviolet absorber, | | - | 0 | 0 | 0 | 0.05 |
| | TINUVIN 1130 | 0.3 wt% | | | | | |
| | Cyanine organic coloring agent | 1 wt% | | | | | |

| | | | | | | | |
|---|---|---|---|---|---|---|---|
| • The listed amounts of water each include the amount of water added via other components such as a dispersion medium. • The values parenthesized in the columns "Organic compound A" and "Organic compound B" each represent a ratio to the amount of SiO₂. | | | | | | | |

**Table 2**

| Evaluation results | | | | | | (%) |
|---|---|---|---|---|---|---|
| | Initial properties | | | Ultraviolet resistant property | Abrasion resistance | |
| | YA | T 550 | TUV 380 | Δ TUV 380 | Initial haze ratio | Haze ratio after test |
| Example A1 | 71.9 | 75.3 | 0.6 | -0.1 (64) | 0.6 | 2.3 (+1.7) |
| Example A2 | 72.8 | 76.3 | 1.4 | -0.4 (100) | 0.6 | 0.8 (+0.2) |
| Example A3 | 72.5 | 75.7 | 0.9 | -0.4 (100) | 0.5 | 1.2 (+0.7) |
| Example A4 | 72.3 | 75.4 | 0.5 | 0.0 (100) | 0.6 | 0.7 (+0.1) |
| Example A5 | 72.4 | 76.0 | 0.7 | -0.2 (100) | 0.4 | 0.8 (+0.4) |
| Example A6 | 72.0 | 75.2 | 1.0 | -0.2 (100) | 0.6 | 0.8 (+0.2) |
| Example A7 | 72.9 | 76.0 | 1.1 | -0.4 (100) | 0.5 | 0.5 (0) |
| Example A8 | 72.8 | 76.0 | 0.8 | -0.1 (100) | 0.6 | 1.3 (+0.7) |
| Example A9 | 72.9 | 76.0 | 1.0 | -0.1 (100) | 0.5 | 0.5 (0) |
| Example A10 | 72.7 | 75.8 | 1.0 | 0.0 (100) | 0.5 | 1.4 (+0.9) |
| Example A11 | 72.7 | 76.1 | 0.8 | -0.2 (100) | 0.4 | 1.1 (+0.7) |
| Example A12 | 72.6 | 75.8 | 1.0 | -0.2 (100) | 0.5 | 1.6 (+1.1) |
| Comparative Example A1 | 73.3 | 76.8 | 0.2 | -11.3 (10) | 0.5 | - |

| | | | | | | |
|---|---|---|---|---|---|---|
| • In "Ultraviolet resistant property", the listed values of the ultraviolet resistant property are those obtained by subtracting the ultraviolet transmittance after the test from the transmittance before the test, and the parenthesized values each represent an ultraviolet irradiation time (unit: hour). • In Examples A1 to A12, the values of T 1550 range from 75.2% to 76.3%, and the film thicknesses range from 0.9 µm to 2.0 µm. | | | | | | |

**[Table 3]**

| Amounts of components contained in film-forming solutions | | | | | | | | |
|---|---|---|---|---|---|---|---|---|
| | ITO fine particles (solid contents) (wt%) | Organic compound A (solid benzotriazole-based ultraviolet absorber; TINUVIN 360) | | Organic compound B (Polyether; Solsperse 41000, PEG 200) (wt%) | Silane coupling agent (GPTMS; ratio to the amount of SiO₂) (wt%) | Silicon alkoxide (TEOS; calculated as the amount of SiO₂) (wt%) | Water (ratio to the amount of Si) (molar ratio) | Concentrated hydrochloric acid (wt%) |
| | | Added amount (solid contents) (wt%) | Average particle diameter (nm) | | | | | |
| Example A21 | 2 | 1.25 (13.9) | 50 | 0.18 (2; Solsperse) | 10 | 9 | 18 | 0.025 |
| Example A22 | 2 | 1.25 (13.9) | 15 | 0.55 (6.1; Solsperse) | 5 | 9 | 18 | 0.025 |
| Example A23 | 1.8 | 1 (12.5) | 15 | 0.40 (5; Solsperse) | 5 | 8 | 16 | 0.025 |
| | | | | 0.40 (5; PEG) | | | | |

| | | | | | | | | |
|---|---|---|---|---|---|---|---|---|
| The listed amounts of water each include the amount of water added via other components such as a dispersion medium. • The values parenthesized in the columns "Organic compound A" and "Organic compound B" each represent a ratio to the amount of SiO₂. | | | | | | | | |

**[Table 4]**

| Evaluation results | | | | | | | (%) |
|---|---|---|---|---|---|---|---|
| | Initial properties | | | | Ultraviolet resistant property | Abrasion resistance | |
| | YA | T 550 | T 1550 | TUV 380 | Δ TUV 380 | Initial haze ratio | Haze ratio after test |
| Example A21 | 72.3 | 75.7 | 21.6 | 0.9 | -0.2 (100) | 0.6 | 0.7 (+0.1) |
| Example A22 | 71.9 | 75.3 | 16.4 | 0.5 | -0.1 (100) | 0.5 | 0.7 (+0.2) |
| Example A23 | 72.1 | 75.4 | 20.4 | 1.1 | -0.4 (100) | 0.4 | 0.6 (+0.2) |

| | | | | | | | |
|---|---|---|---|---|---|---|---|
| • In "Ultraviolet resistant property", the listed values of the ultraviolet resistant property are those obtained by subtracting the ultraviolet transmittance after the test from the transmittance before the test, and the parenthesized values each represent an ultraviolet irradiation time (unit: hour). • In ExamplesA21 to A23, the film thicknesses range from 1.8 µm to 1.9 µm. | | | | | | | |

**[Table 5]**

| Amounts of components contained in film-forming solutions | | | | | | | |
|---|---|---|---|---|---|---|---|
| | ITO fine particles (solid contents) (wt%) | Organic compound A (benzenethiol-copper complex; EST-5) | | Organic compound B (Polyether; Solsperse 41000) (wt%) | Silicon alkoxide (TEOS; calculated as the amount of SiO₂) (wt%) | Water (ratio to the amount of Si) (molar ratio) | Concentrated hydrochloric acid (wt%) |
| | | Added amount (solid contents) (wt%) | Average particle diameter (nm) | | | | |
| Example B1 | 0 | 2 (33.3) | 135 | 0.1 (1.7) | 6 | 21 | 0.05 |
| Example B2 | 0 | 2 (33.3) | 135 | 0 (0) | 6 | 21 | 0.05 |
| Example B3 | 0 | 2 (33.3) | 88 | 0 (0) | 6 | 21 | 0.05 |
| Example B4 | 2 | 2 (50.0) | 131 | 0.1 (2.5) | 4 | 32 | 0.05 |
| Example B5 | 2 | 2 (50.0) | 135 | 0.1 (2.5) | 4 | 32 | 0.05 |
| Example B6 | 0 | 2 (33.3) | 86 | 0 (0) | 6 | 27 | 0.05 |
| Comparative Example B1 | 0 | 2 (50.0) | 167 | 0.1 (2.5) | 4 | 32 | 0.05 |
| Comparative Example B2 | 0 | 2 (50.0) | (Added in the form of a solute) | 0 (0) | 4 | 32 | 0.05 |
| Comparative Example B3 | 2 | 2 (50.0) | 167 | 0.1 (2.5) | 4 | 32 | 0.05 |
| Comparative Example B4 | 2 | 2 (50.0) | (Added in the form of a solute) | 0.1 (2.5) | 4 | 32 | 0.05 |

| | | | | | | | |
|---|---|---|---|---|---|---|---|
| • The listed amounts of water each include the amount of water added via other components such as a dispersion medium. • The values parenthesized in the columns "Organic compound A" and "Organic compound B" each represent a ratio to the amount of SiO₂. • In Example B6, paratolueneparatoluenesulfonic acid was used in place of concentrated hydrochloric acid at the same concentration, and 3.8% by weight of tetrahydrofuran and 5% by weight (relative to the amount of SiO₂) of GPTMS were further added. | | | | | | | |

**[Table 6]**

| Initial properties and light resistance | | | | | | | (%) |
|---|---|---|---|---|---|---|---|
| | Initial properties | | | | | Ultraviolet resistance property | |
| | Haze ratio | T 550 | T 1550 | TUV 380 | TUV 400 | Δ TUV 380 (100) | Δ TUV 400 (100) |
| Example B1 | 1.2 | 72.1 | - | 0.8 | 0.7 | -1.2 | -1.7 |
| Example B2 | 0.8 | 72.6 | - | 1.0 | 0.8 | -1.3 | -1.9 |
| Example B3 | 1.0 | 72.7 | - | 1.3 | 1.1 | -0.6 | 0.8 |
| Example B4 | 2.8 | 70.6 | 15.4 | 0.5 | 0.4 | -0.5 | -0.4 |
| Example B5 | 2.4 | 70.0 | 14.0 | 0.4 | 0.3 | -0.4 | -0.3 |
| Example B6 | 0.6 | 74.2 | - | 1.2 | 1.3 | -0.8 | -1.4 |
| Comparative Example B1 | 6.3 | 69.4 | - | 1.6 | 1.5 | - | - |
| Comparative Example B2 | 17.8 | 69.0 | - | 12.5 | 23.2 | 1.5 | 1.6 |
| Comparative Example B3 | 6.3 | 68.1 | 17.0 | 0.8 | 0.7 | -0.4 | -0.5 |
| Comparative Example B4 | 43.3 | 69.0 | 24.1 | 11.0 | 20.7 | 1.3 | 1.6 |

| | | | | | | | |
|---|---|---|---|---|---|---|---|
| • In "Ultraviolet resistant property", the listed values of the ultraviolet resistant property are those obtained by subtracting the ultraviolet transmittance after the test from the transmittance before the test, and the values parenthesized each represent an ultraviolet irradiation time (unit: hour). • The film thicknesses were not measured for these Examples and Comparative Examples. | | | | | | | |

**[Table 7]**

| Amounts of components contained in film-forming solutions | | | | | | |
|---|---|---|---|---|---|---|
| | Organic compound A (high-molecular-weight ultraviolet absorber) | | Organic compound B (Polyether; Solsperse 41000) (wt%) | Silicon alkoxide (TEOS; calculated as the amount of SiO₂) (wt%) | Water (ratio to the amount of Si) (molar ratio) | Concentrated hydrochloric acid (wt%) |
| | Added amount (solid contents) (wt%) | Type | | | | |
| Comparative Example C1 | 5.2 (40) | UVA-383MG | 0.26 (2) | 13 | 7 | 0.1 |
| Comparative Example C2 | 5.2 (40) | UVA-1383MG | 0.26 (2) | 13 | 7 | 0.1 |

| | | | | | | |
|---|---|---|---|---|---|---|
| • The listed amounts of water each include the amount of water added via other components such as a dispersion medium. • The values parenthesized in the columns "Organic compound A" and "Organic compound B" each represent a ratio to the amount of SiO₂. • UVA-383MG: benzophenone-based high-molecular-weight ultraviolet absorber (having a molecular weight of 1,000,000 or more), UVA-1383MG: benzotriazole-based high-molecular-weight ultraviolet absorber (having a molecular weight of 1,000,000 or more) | | | | | | |

**[Table 8]**

| Evaluation results | | | | | (%) |
|---|---|---|---|---|---|
| | | Initial properties | | Abrasion resistance | |
| | YA | T 550 | TUV 380 | Initial haze ratio | Haze ratio after test |
| Comparative Example C1 | 73.9 | 77.3 | 8.7 | 0.5 | 30.4 (+29.9) |
| Comparative Example C2 | 73.8 | 77.3 | 4.1 | 0.3 | 35.6 (+35.3) |

| | | | | | |
|---|---|---|---|---|---|
| • In Comparative Examples C1 to C2, the film thicknesses were larger than 3 µm. | | | | | |

Although the ultraviolet shielding film-coated glass sheet of Comparative Example A1, in which an ultraviolet absorber that is liquid at ordinary temperature was used, had highly excellent ultraviolet shielding ability before the ultraviolet irradiation test, the ultraviolet transmittance was significantly increased after the ultraviolet irradiation. The ultraviolet shielding film-coated glass sheets of Examples were slightly inferior to the ultraviolet shielding film-coated glass sheet of Comparative Example A1 in initial ultraviolet shielding properties, but maintained a reliable ultraviolet shielding effect even after being subjected to ultraviolet irradiation for a long time. The ultraviolet shielding film-coated glass sheets of Examples are more suitable for uses for which the ultraviolet shielding effect is required to be sustained over a long period of time, such as use as window glasses.

The ultraviolet shielding film-coated glass sheets of Comparative Examples B1 and B3, in each of which an ultraviolet absorber having an excessively large average particle diameter was used, had such high haze ratios that the ultraviolet shielding film-coated glass sheets were not suitable for use as window glasses. As is clear from the comparison between Example B1 and Comparative Example B1, when the average particle diameter exceeds 150 nm, the haze ratio is sharply increased.

Sufficient ultraviolet shielding ability could not be obtained from the ultraviolet shielding film-coated glass sheets of Comparative Examples B2 and B4 in which a compound having ultraviolet shielding ability was added in the form of a solute. The benzenethiol-copper complex derivative is conventionally used as an anti-oxidizing agent. When only the antioxidant function is demanded, it is sufficient that the benzenethiol-copper complex derivative is added to the film in the form of a solute dissolved in a solvent. However, in order for the organic compound to exhibit its ultraviolet absorbing ability to an extent sufficient for practical use, the organic compound needs to be added to the film in the form of solid fine particles, which has not been known hitherto.

Also, sufficient ultraviolet shielding ability could not be obtained from the ultraviolet shielding film-coated glass sheets of Comparative Examples C1 and C2 in which high-molecular-weight ultraviolet absorbers were used. A high-molecular-weight ultraviolet absorber is produced by polymerization of a compound containing an ultraviolet absorbing group and a functional group contributing to polymerization (methacryl group in the absorbers used in Comparative Examples C1 and C2). The polymer has a functional group having ultraviolet absorbing ability in a part of the side chains of the molecular chain. However, a main chain itself or a major portion composed of the main chain and other side chains does not have ultraviolet absorbing ability. Therefore, although the high-molecular-weight polymer is adapted to be added in the form of a solid, the high-molecular-weight polymer has a relatively low proportion of groups contributing to absorption of ultraviolet light, and is not suitable for providing sufficient ultraviolet shielding ability. Also from the standpoint of maintaining abrasion resistance, addition of the high-molecular-weight ultraviolet absorber is not suitable.

Each of the ultraviolet shielding film-coated glass sheets of Examples had a haze ratio of 3% or less, a T 550 of 70% or more, a TUV 380 of 1.5% or less, and a ΔTUV 380 of 1.5% or less. That is, the ultraviolet shielding film-coated glass sheets of Examples had excellent properties as glass articles for outdoor use. In addition, the glass sheets each coated with a film to which ITO fine particles were further added had a T 1550 of 25% or less. That is, the glass sheets additionally had excellent infrared shielding ability.

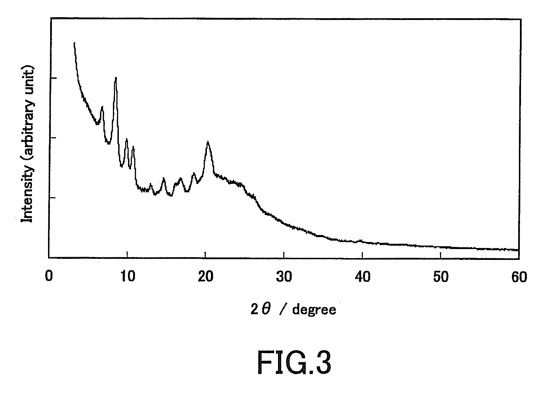

When a cross-section of each of the ultraviolet shielding film-coated glass sheets obtained in Examples was observed with a scanning electron microscope (SEM), it was confirmed that the organic compound A was dispersed in the film in the form of fine particles. In addition, when the film was analyzed using an X-ray diffraction apparatus, a peak derived from the organic compound A present in the form of fine particles was confirmed. This shows that the organic compound A was present in the film in the form of a crystal. An X-ray diffraction chart of Example A11 is shown in FIG. 2, and an X-ray diffraction chart of Example B6 is shown in FIG. 3.

The conditions for measurements of the X-ray diffractions were as shown below. The measurement apparatus used was "SmartLab" manufactured by Rigaku Corporation.
- Measurement conditions: CuKα radiation, tube voltage of 45 kV, tube current of 200 mA (9.0 kW)
- Measurement method: Out-of-plane thin-film X-ray diffraction (parallel beam optics; ω-fixed 2θ scan)
- X-ray diffraction angle: 0.50°
- 2θ scan range: 3° to 60°
- Sampling angle: 0.02°
- Scan speed: 1.0°/minute

The fact that the organic compound A having ultraviolet absorbing ability was present in a crystalline state in the films of Examples can be thought to have contributed to achieving the ultraviolet shielding properties of Examples which were much more excellent than those of Comparative Examples.

### (Example D1)

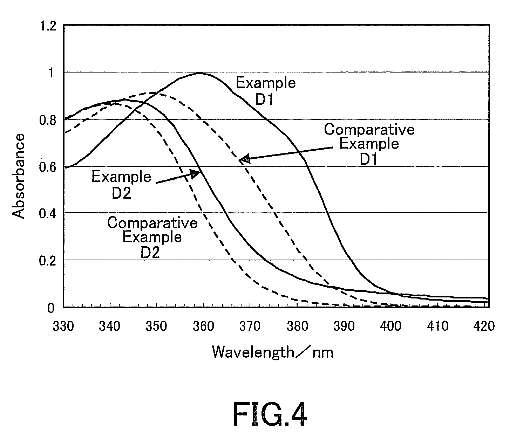

A dispersion liquid that contained water as a dispersion medium and that contained a benzotriazole-based ultraviolet absorber ("TINUVIN 360" manufactured by Ciba Specialty Chemicals; the organic compound α) as a dispersoid was prepared in the same manner as in Example A1. The dispersion liquid was prepared so that the average particle diameter of the ultraviolet absorber was 83 nm, and the solid content concentration of the ultraviolet absorber was 0.002% by weight. The wavelength dependence of the absorbance of the dispersion liquid was measured using a spectrophotometer (UV-1700 manufactured by Shimadzu Corporation). The optical path length of a cell used in the measurement was 1 cm. The results are shown in FIG. 4 and Table 9 along with the results for Example D2 and Comparative Examples D1 and D2.

### (Example D2)

A dispersion liquid was prepared in the same manner as in Example D1, except that a triazine-based ultraviolet absorber represented by the formula presented below was used in place of the benzotriazole-based ultraviolet absorber. The dispersion liquid was prepared so that the average particle diameter of the ultraviolet absorber was 90 nm, and the solid content concentration of the ultraviolet absorber was 0.002% by weight. The absorbance of the dispersion liquid was measured in the same manner as in Example D1.

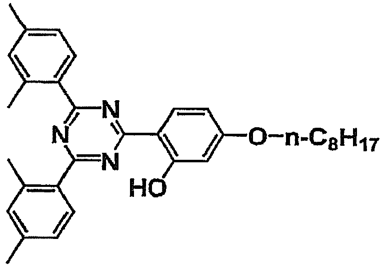

### (Comparative Example D1)

A solution was prepared by dissolving a benzotriazole-based ultraviolet absorber in tetrahydrofuran (THF). The solution was prepared so that the concentration of the ultraviolet absorber was 0.002% by weight. The absorbance of the solution was measured in the same manner as in Example D1.

### (Comparative Example D2)

A solution was prepared by dissolving the triazine-based ultraviolet absorber used in Example D2 in tetrahydrofuran (THF). The solution was prepared so that the concentration of the ultraviolet absorber was 0.002% by weight. The absorbance of the solution was measured in the same manner as in Example D1.

**[Table 9]**

| | Absorbance | | | |
|---|---|---|---|---|
| | Peak wavelength | 380 nm | 390 nm | 400 nm |
| Example D1 (benzotriazole-based; dispersion liquid) | 0.995 (358 nm) | 0.652 | 0.228 | 0.059 |
| Comparative Example D1 (benzotriazole-based; solution) | 0.911 (348 nm) | 0.234 | 0.054 | 0.010 |
| Example D2 (triazine-based; dispersion liquid) | 0.881 (342 nm) | 0.122 | 0.077 | 0.058 |
| Comparative Example D2 (triazine-based; solution) | 0.866 (340 nm) | 0.030 | 0.008 | 0.003 |

| | | | | |
|---|---|---|---|---|
| *Wavelengths at which the absorbance was highest and the values of the absorbance at the wavelengths are shown in the column "Peak wavelength". | | | | |

The absorbance of Example D1 was 0.40 or more at a wavelength of 380 nm, 0.20 or more at a wavelength of 390 nm, and 0.18 or less at a wavelength of 400 nm. The absorption peak wavelength in a spectral absorbance curve of Example D1 was 358 nm, and was at least 8 nm longer than the absorption peak wavelength of Comparative Example D1. The absorbance (the highest absorbance) of Example D1 at the wavelength was at least 0.05 higher than the highest absorbance of Comparative Example D1.

### INDUSTRIAL APPLICABILITY

The glass article having ultraviolet shielding ability according to the present invention has a high utility value as a product suitable for use as a window facing the outdoors, a solar cell cover glass, and the like.

### DESCRIPTION OF REFERENCE NUMERALS

- 1: Glass sheet
- 2: Ultraviolet shielding film

## Claims

1. A glass article having ultraviolet shielding ability, comprising a glass sheet and an ultraviolet shielding film formed on the glass sheet, wherein
the ultraviolet shielding film comprises:
silicon oxide; and
fine particles of an organic compound A as an ultraviolet shielding component, the organic compound A being solid at ordinary temperature and having a molecular weight of 5,000 or less, and
the fine particles have an average particle diameter of 150 nm or less.

2. The glass article according to claim 1, wherein an ultraviolet transmittance (TUV 380) calculated in accordance with ISO 9050 (1990) is 2% or less.

3. The glass article according to claim 2, wherein a light transmittance (T 550) at a wavelength of 550 nm is more than 70%.

4. The glass article according to claim 1, wherein the silicon oxide accounts for 50% by weight or more of the ultraviolet shielding film.

5. The glass article according to claim 1, wherein the organic compound A has two or more functional groups represented by the following formula (1) per molecule: 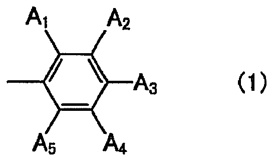 where A₁ to A₅ are each independently a hydrogen atom, a hydroxyl group, a linear or branched alkyl group having 1 to 20 carbon atoms, or a functional group represented by the following formula (2), and at least one of A₁ to A₅ is the functional group represented by the following formula (2):

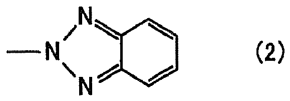

6. The glass article according to claim 5, wherein the organic compound A has two or more functional groups represented by the following formula (3) per molecule: 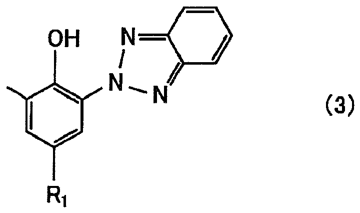 where R₁ is a linear or branched alkyl group having 1 to 20 carbon atoms.

7. The glass article according to claim 6, wherein
the organic compound A has a structural unit including: two functional groups represented by the formula (3); and an alkylene group having 3 or less carbon atoms, and
the two functional groups are connected via the alkylene group.

8. The glass article according to claim 7, wherein the organic compound A is a compound represented by the following formula (4): 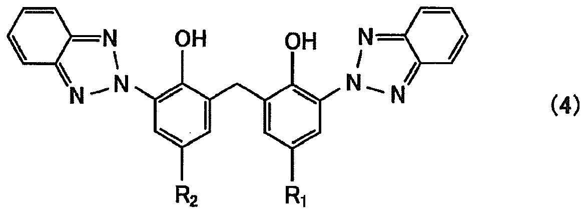 where R₁ and R₂ are each independently a linear or branched alkyl group having 1 to 20 carbon atoms.

9. The glass article according to claim 1, wherein the organic compound A has a structural unit represented by the following formula (5) in a molecule thereof:

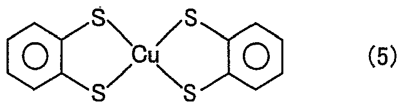

10. The glass article according to claim 1, wherein the ultraviolet shielding film further comprises an organic compound B that is at least one selected from polyether compounds, polyol compounds, polyvinylpyrrolidones, and polyvinylcaprolactams.

11. The glass article according to claim 1, wherein the ultraviolet shielding film further comprises a silane coupling agent or a structural unit derived from a silane coupling agent.

12. The glass article according to claim 1, wherein the ultraviolet shielding film further comprises indium tin oxide (ITO) fine particles.

13. A fine particle-dispersed composition for forming an ultraviolet shielding film, the fine particle-dispersed composition comprising a dispersion medium that is a liquid and an ultraviolet shielding component dispersed in the dispersion medium, wherein
the ultraviolet shielding component comprises fine particles of an organic compound A, the organic compound A being solid at ordinary temperature and having a molecular weight of 5,000 or less, and
the fine particles have an average particle diameter of 150 nm or less.

14. The fine particle-dispersed composition according to claim 13, wherein an absorbance at a wavelength of 390 nm is 0.20 or more, and an absorbance at a wavelength of 400 nm is 0.18 or less when the absorbances are measured under conditions that a content of the ultraviolet shielding component is 0.002% by weight, and an optical path length is 1 cm.

15. The fine particle-dispersed composition according to claim 13, wherein the organic compound A has two or more functional groups represented by the following formula (1) per molecule: 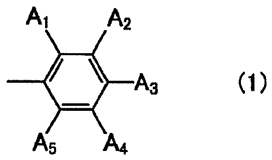 where A₁ to A₅ are each independently a hydrogen atom, a hydroxyl group, a linear or branched alkyl group having 1 to 20 carbon atoms, or a functional group represented by the following formula (2), and at least one of A₁ to A₅ is the functional group represented by the following formula (2):
